# EUROPÄISCHE PATENTANMELDUNG

(11) **EP 1 391 433 A2**
(43) Veröffentlichungstag der Anmeldung: **25.02.2004**
(21) Anmeldenummer: 03016391.9
(22) Anmeldetag: 21.07.2003
(51) Int. Cl.: C03B 23/025, C03B 32/02, C03B 40/00, C03C 10/12

(54) **Verfahren zur Formung von Glas oder Glaskeramik und zur Herstellung einer dafür geeigneten Form**

(30) Priorität: 16.08.2002 DE 10238607
(71) Anmelder: Schott Glaswerke, 55122 Mainz (DE); CARL-ZEISS-STIFTUNG trading as SCHOTT GLAS, 55122 Mainz (DE)
(72) Erfinder: Döhring, Thorsten, 55128 Mainz (DE); Jedamzik, Ralf, 64347 Griesheim (DE); Esemann, Hauke, 55286 Wörrstadt (DE); Hölzel, Eva, 55270 Ober-Olm (DE)
(74) Vertreter: Gahlert, Stefan, Dr.-Ing.

(57) **Zusammenfassung**

Es wird ein Verfahren zur Formung von Glas oder Glaskeramik angegeben, bei dem eine Glaskeramik-Form (12) aus einem Ausgangsglas durch Gießen hergestellt wird, das durch eine Wärmebehandlung in eine Keatit-Glaskeramik mit überwiegender Keatit-Mischkristallphase umgewandelt wird. Mit dieser Keatit-Glaskeramikform (12) können durch einen Senkprozeß aus Rohlingen (14) unter Schwerkrafteinfluß bei einer Temperatur oberhalb der Transformationstemperatur des Rohlings (14) Formkörper hergestellt werden (Fig. 1).

## Beschreibung

Die Erfindung betrifft ein Verfahren zur Formung von Glas oder Glaskeramik, insbesondere zur Herstellung eines Spiegelsubstrates, bei dem ein Formkörper durch Absenken eines Rohlings unter Schwerkrafteinfluß auf eine Form hergestellt wird.

Die Erfindung betrifft ferner ein Verfahren zur Herstellung einer dafür geeigneten Form.

Aus der DE 199 38 811 A1 ist ein Verfahren zur Formgebung von Glaskeramikteilen bekannt, wonach ein Rohling auf eine Form unter Einsatz von Infrarotstrahlung und ggf. mit Unterstützung durch ein Vakuum oder einen Überdruck abgesenkt wird.

Ein derartiges Formgebungsverfahren ist geeignet, um Rohlinge in großen Stückzahlen dreidimensional zu verformen. So können bspw. wannenförmige oder rinnenförmige Teile mit kreissegmentförmigem, rechteckigem, trapezförmigem oder andersgeartetem Querschnitt hergestellt werden.

Die Präzision der so hergestellten Teile ist naturgemäß von der Präzision der verwendeten Form abhängig. Bislang wurden hiernach lediglich Massenteile, meistens unter Verwendung von Metallformen, hergestellt.

Für die Herstellung von Teleskopen für wissenschaftliche Röntgensatelliten werden bislang polierte, massive zylinderförmige Spiegelschalensubstrate aus der Glaskeramik Zerodur® als Abbildungsoptiken eingesetzt. Wegen der niedrigen Reflektivität aller bekannten Materialien für kurzwellige Röntgenstrahlen bei senkrechtem Strahlungseinfall werden Röntgenspiegel und Röntgenteleskope vorzugsweise bei streifendem Einfall unter Ausnutzung des physikalischen Effektes der Totalreflexion betrieben. Hierzu werden zweigeteilte Teleskope für zwei Reflexionen eingesetzt, wobei die zylinderförmigen Spiegelschalen die spezielle Form einer Parabel und einer Hyperbel haben, welche nach Wolters für solche Anwendungen besonders gut geeignet ist. Bei den Teleskopen der wissenschaftlichen Satelliten ROSAT und CHANDRA wurden polierte, massive, zylinderförmige Spiegelschalensubstrate aus Zerodur® als Abbildungsoptiken eingesetzt. Bei dem Röntgensatelliten XMM-NEWTON wurden dagegen als Spiegelsubstrate galvanisch replizierte Nickelschalen mit einem ähnlichen Wolter-Profil verwendet. Bisher verwendeten alle Röntgensatelliten konusförmige Vollzylinder als Spiegelsubstrate.

Für die derzeit geplante nächste Generation von Röntgensatelliten (XEUS, CONSTELLATION-X) sind deutlich größere Teleskope vorgesehen. Solche Teleskope lassen sich aus Kostengründen nicht mehr als Vollzylinder bauen, sondern sollen aus segmentierten Spiegelsegmenten zusammengesetzt werden. Als Herstellungsverfahren für die Spiegelschalen dieser neuartigen Röntgenteleskope sind zwei unterschiedliche Replikationsverfahren vorgesehen, um den Übergang von der Einzelproduktion bei bisherigen Röntgenspiegeln zur Serienfertigung und Massenproduktion für die zukünftigen Satelliten überzugehen. Beide Verfahren nutzen Präzisionsformkörper aus Zerodur®-Glaskeramik, sogenannte Mandrels. Mittels eines Nickel-galvanischen Verfahrens (XEUS) oder mittels der Abformung eines Epoxidharz-Kunststoffes als Zwischenlage (CONSTELLATION-X) wird dabei die Präzision des Formkörpers auf die Spiegelschalensegmente übertragen. Beide Prozesse finden bei niedrigen Temperaturen unterhalb von 100°C statt.

Für die erwähnten neuen Replikationsverfahren zur Herstellung von segmentierten Röntgenspiegeln werden vorgeformte Glassubstrate benötigt. Dies gilt sowohl für das geplante NASA-Projekt CONSTELLATION-X, als auch für den geplanten ESA-Satelliten XEUS, hier allerdings nur als Alternativtechnologie zum favorisierten Galvanikverfahren.

Die erwähnten Mandrels aus Zerodur® sind als Formen zur Herstellung von vorgeformten Glassubstraten nicht geeignet, da der Einsatzbereich von Zerodur® maximal etwa 600 °C beträgt, während schon ab 130 °C bestimmte Einschränkungen bestehen.

Um eine kostengünstige Formgebung von Spiegelsubstraten zu ermöglichen, sind jedoch Temperaturen notwendig, die teilweise deutlich oberhalb von 600°C liegen.

Andererseits lassen sich gesinterte Keramikformen insbesondere in größeren Abmessungen nicht mit der notwendigen Formgenauigkeit und Präzision (z.B. Porenfreiheit) herstellen.

Die Herstellung von Quarzformen ist dagegen sehr teuer und auf kleinere Abmessungen beschränkt.

Die Aufgabe der Erfindung besteht demnach darin, ein Verfahren zur Formung von Glas oder Glaskeramik anzugeben, das insbesondere zur Herstellung eines Spiegelsubstrates geeignet ist, mit dem sich Formkörper auf möglichst kostengünstige und rationelle Weise mit der notwendigen Genauigkeit herstellen lassen, die in der Größenordnung von 30 µm Flächenformtoleranz oder darunter liegen kann.

Ferner soll ein geeignetes Herstellverfahren zur Herstellung einer hierzu geeigneten Form angegeben werden.

Bezüglich der Form für die Heißformgebung von Glas oder Glaskeramik wird diese Aufgabe erfindungsgemäß dadurch gelöst, daß die Form als Glaskeramik-Form aus einem Ausgangsglas durch Gießen hergestellt wird, das durch eine Wärmebehandlung in eine Keatit-Glaskeramik mit überwiegender Keatit-Phase umgewandelt wird.

Bezüglich des Verfahrens zur Formung von Glas oder Glaskeramik wird die Aufgabe der Erfindung dadurch gelöst, daß ein Formkörper durch Absenken eines Rohlings unter Schwerkrafteinfluß auf eine derartig hergestellte Keatit-Glaskeramikform oberhalb der Transformationstemperatur des Rohlings hergestellt wird.

Die Aufgabe der Erfindung wird auf diese Weise vollkommen gelöst.

Die erfindungsgemäß hergestellte Glaskeramik-Form mit überwiegender Keatit-Phase weist eine hohe Temperaturbeständigkeit auf, die bis zu etwa 1000°C reicht, wobei kurzfristig sogar noch höhere Temperaturen möglich sind. Damit kann die erfindungsgemäße Form z.B. im Senkverfahren zur Heißformgebung von etwa Borosilikatglas bei Temperaturen verwendet werden, die deutlich höher als die Transformationstemperatur sind. Auf diese Weise läßt sich eine hochwertige Abformung des so hergestellten Formkörpers von der Keatit-Glaskeramikform erreichen. Mit herkömmlichen Formen aus Zerodur®-Glaskeramik, die als Hauptkristallphase Hochquarz-Mischkristall aufweisen, ist dies nicht möglich. Im Unterschied zu den üblichen Sinterkeramiken ist die Keatit-Glaskeramik weitgehend porenfrei und hat damit eine gute Polierbarkeit. Poren an der Formoberfläche würden möglicherweise beim Senkprozeß störende Defekte beim Glassubstrat erzeugen. Dies wird durch das erfindungsgemäße Verfahren vermieden.

Der thermische Ausdehnungskoeffizient von Keatit-Glaskeramik, der zwischen 20 °C und 700 °C etwa im Bereich von 1 bis 3 x 10⁻⁶/K liegt, ist zur Formgebung von Borosilikatgläsern besonders geeignet, da deren Ausdehnungskoeffizient im Bereich zwischen 3 und 4 x 10⁻⁶/K liegt. Dagegen ist der niedrigere thermische Ausdehnungskoeffizient von Zerodur®-Glaskeramik, der zwischen 20 °C und 700 °C im Bereich von etwa 0,2 x 10⁻⁶/K liegt, wegen der schlechteren Abstimmung auf den Ausdehnungskoeffizienten von Borosilikatgläsern deutlich ungünstiger.

Das neuartige Herstellverfahren zur Heißformgebung von Glas oder Glaskeramik unter Verwendung der Keatit-Glaskeramikform führt zu einer deutlichen Erhöhung der Präzision bei der Herstellung der Formkörper, wobei das Herstellverfahren deutlich vereinfacht wird und gleichzeitig eine Abformung durch ein aufwendiges Nickel-Galvanikverfahren vermieden wird.

Es ist möglich, den Formkörper noch in seinem durchsichtigen Zustand zunächst wieder auf Raumtemperatur abzukühlen, um eine Prüfung des Formkörpers auf seine Qualität (Blasenfreiheit, Einschlüsse, Inhomogenitäten, Schlieren, und dergleichen) durchführen zu können. Bei der Forderung nach besonders guter Homogenität ist dabei sogar eine Prüfung mit einem Interferometer möglich.

Die Umwandlung in eine Keatit-Glaskeramik kann in einem nachfolgenden Wärmebehandlungsschritt erreicht werden.

Da die erfindungsgemäße Keatit-Glaskeramikform aus gegossenen Rohglasblöcken hergestellt wird, lassen sich damit auch große und dicke Formen herstellen. Dabei erhöht die Dicke der Form deren Steifigkeit und garantiert eine bessere Formtreue. Das potentielle Alternativmaterial Quarz bietet diese Möglichkeit nicht oder nur zu deutlich höheren Herstellkosten.

Es lassen sich hochstabile Keatit-Glaskeramikformen auch in großen Dimensionen erzielen. So sind etwa Durchmesser von acht Metern bei 20 cm Dicke oder mehr erreichbar.

Die Keatit-Glaskeramik hat eine gute Langzeitstabilität und eine hohe Resistenz gegen chemische Umwelteinflüsse. Ein bei der Glaskeramik Zerodur® bekannter Hysterese-Effekt tritt bei Keatit-Glaskeramik nicht auf.

Es ist grundsätzlich bekannt, daß sich Gläser aus dem System Li₂O-Al₂O₃-SiO₂ in Glaskeramiken (LAS-Glaskeramiken) mit Hochquarz-Mischkristallen und/oder Keatit-Mischkristallen als Hauptkristallphasen umwandeln lassen (vgl. EP-A-1 170 264). Die Herstellung dieser Glaskeramiken erfolgt in verschiedenen Stufen. Nach der Schmelze und Heißformgebung wird das Material üblicherweise unter die Transformationstemperatur abgekühlt. Anschließend wird das Ausgangsglas durch gesteuerte Kristallisation in einen glaskeramischen Artikel überführt. Diese Keramisierung erfolgt in einem mehrstufigen Temperaturprozeß, bei dem zunächst durch Keimbildung bei einer Temperatur zwischen meist 600 und 800°C Keime, üblicherweise aus TiO₂- oder ZrO₂/TiO₂-Mischkristallen, erzeugt werden. Auch SnO₂ kann an der Keimbildung beteiligt sein. Bei einer anschließenden Temperaturerhöhung wachsen bei einer Kristallisationstemperatur von etwa 750 bis 900°C Hochquarz-Mischkristalle auf diesen Keimen auf. Hierbei läßt sich der Volumenanteil zwischen der kristallinen Hochquarz-Mischkristallphase und der Glasphase derart steuern, daß sich annähernd ein Ausdehnungskoeffizient von 0 ergibt. Hierzu wird meist ein Anteil von etwa 80 % Hochquarz-Mischkristall und etwa 20 % Restglas angestrebt.

Wird jedoch eine weitere Temperaturerhöhung im Bereich von ca. 900 bis 1200°C vorgenommen, so wandeln sich die Hochquarz-Mischkristalle weiter in Keatit-Mischkristalle um (EP-A-1 170 264). Die Umwandlung in Keatit-Mischkristalle ist mit einem Kristallwachstum, d.h. zunehmender Kristallitgröße, verbunden, wodurch zunehmend Lichtstreuung erfolgt, d.h. die Lichttransmission wird zunehmend verringert. Der glaskeramische Artikel erscheint dadurch zunehmend opak. Gemäß der EP-A-1 170 264 erfolgt eine kurzzeitige Temperaturerhöhung auf bis zu 1100°C oder mehr, wodurch sich die Glaskeramik in eine Keramik mit überwiegender Keatit-Mischkristallphase im inneren und mit einer oberflächennah gebildeten Hochquarz-Mischkristallphase umwandelt.

Hierdurch ist das erfindungsgemäße Verfahren jedoch nicht nahegelegt, da derartig hergestellte Formkörper bislang nicht als Formen für die Heißformgebung von Glas oder Glaskeramik in Betracht gezogen wurden. Die nicht ausreichend stabile, oberflächennahe Hochquarz-Mischkristallphase würde einen derartigen Einsatz entgegenstehen. Derartige Formkörper werden vielmehr in transluzenter oder opaker Form als Kochflächen oder Kochgeschirr und in transparenter Form als Brandschutzglas, Kaminsichtscheiben, Kochgeschirr oder Fenster für Pyrolyseherde eingesetzt.

Eine erfindungsgemäße Glaskeramik-Form läßt sich mit den folgenden Schritten herstellen:
- Gießen eines Lithiumaluminosilicat-Ausgangsglases in eine Form,
- Tempern zur Keimbildung bei einer Keimbildungstemperatur von etwa 600 bis 900°C,
- Tempern zur Herstellung einer Keatit-Glaskeramik bei einer Keatit-Bildungstemperatur von etwa 800 bis 1300°C, bis die kristalline Phase weitgehend in Keatit-Mischkristalle umgesetzt ist,
- Abkühlen der so hergestellten Glaskeramik-Form auf Raumtemperatur.

Es besteht hierbei grundsätzlich die Möglichkeit, nach dem Tempern bei Keimbildungstemperatur zunächst ein Tempern zur Kristallisation bei einer höheren Kristallisationstemperatur auszuführen und erst danach eine weitere Temperaturerhöhung durchzuführen, um die zunächst gebildeten Hochquarz-Mischkristalle möglichst vollständig in Keatit-Mischkristalle umzuwandeln.

Nach dem Gießen des Ausgangsglases oder nach einem Tempern zur Keimbildung oder Kristallisation kann der so gebildete Körper im noch transparenten Zustand zunächst auf seine innere Qualität (Blasen, Einschlüsse, Inhomogenitäten, Schlieren und dergleichen) geprüft werden, bevor die Umwandlung in einen opaken Körper durch ein weiteres Tempern erfolgt.

Es kann zunächst durch Tempern bei Keimbildungstemperatur und nachfolgendes Tempern bei Kristallisationstemperatur eine Glaskeramik erzeugt werden, die Hochquarz als überwiegende Kristallphase enthält. So kann z.B. aus dem Ausgangsglas zur Herstellung einer Zerodur®-Glaskeramik zunächst die Zerodur®-Glaskeramik mit überwiegender Hochquarz-Mischkristallphase erzeugt werden, die eine Ausdehnungskoeffizienten von etwa 0 ± 0,15·10⁻⁶/K besitzt. Durch ein anschließendes Aufheizen und Tempern auf die höhere Keatit-Bildungstemperatur können die zuvor gebildeten Hochquarz-Mischkristalle weitgehend in Keatit-Mischkristalle umgewandelt werden.

Alternativ hierzu kann auch ohne eine Zwischenabkühlung gearbeitet werden oder nach dem Tempern zur Keimbildung bei einer niedrigeren Temperatur im Bereich von etwa 650 bis 850°C sofort auf die höhere notwendige Temperatur zur Keatit-Bildung im Bereich von etwa 800 bis 1300°C aufgeheizt werden.

Auch eine dreistufige Prozeßführung durch Tempern zunächst bei Keimbildungstemperatur im Bereich von etwa 650 bis 850°C, mit einem nachfolgenden Tempern bei Kristallisationstemperatur im Bereich von etwa 750 bis 900°C (zur Ausbildung der Hochquarz-Kristallphase) und ein nachfolgendes Tempern bei Keatit-Bildungstemperatur im Bereich zwischen etwa 850 und 1300°C zur Umwandlung der Hochquarz-Mischkristalle in Keatit-Mischkristalle ist möglich.

Das Tempern zur Keatit-Bildung erfolgt vorzugsweise bei mindestens 900°C, vorzugsweise bei mindestens 1000°C über mindestens eine Stunde, insbesondere über mindestens zwei Stunden, besonders bevorzugt über einen Zeitraum von ca. vier Stunden.

Bei noch höherer Temperatur kann die Verweildauer entsprechend verkürzt werden.

Bei dem erfindungsgemäßen Verfahren wird das Tempern zur Keatit-Bildung vorzugsweise bei einer derartigen Temperatur und Zeit durchgeführt, daß der kristalline Anteil weitgehend in Keatit umgewandelt ist. Dabei werden vorzugsweise mindestens etwa 80 Vol.-%, insbesondere etwa 85 Vol.-%, und besonders bevorzugt mindestens etwa 90 Vol.-% des kristallinen Anteils des Materials in Keatitmischkristalle umgewandelt.

Allenfalls kann dann noch eine Glasrestphase vorhanden sein, in der die in den Hochquarz-Mischkristallen nicht löslichen Bestandteile, wie etwa Na₂O und Erdalkalioxide wie CaO, SrO, BaO angereichert sind. Vorzugsweise ist eine etwaige Restglasphase jedoch lediglich in Form von Einschlüssen vorhanden, die in dem überwiegend aus Keatit-Mischkristallen bestehenden Gefüge eingelagert sind.

Durch eine derartige Struktur wird die zur Heißformgebung von Gläsern notwendige Formstabilität und Temperaturstabilität in einem Bereich von 550 °C bis zu etwa 1000°C gewährleistet. Ist noch ein größerer Anteil an Hochquarz-Mischkristallphase oder glasiger Restphase im Gesamtkörper vorhanden, so kann die Formund Temperaturstabilität bei Temperaturen oberhalb von 600°C oder bei höheren Temperaturen ggf. beeinträchtigt sein.

In vorteilhafter Weiterbildung der Erfindung wird die Glaskeramik-Form nach dem Gießen des Ausgangsglases und/oder nach dem Tempern mechanisch nachbearbeitet, insbesondere geschliffen, poliert oder geläppt.

Auf diese Weise läßt sich die notwendige Oberflächenbeschaffenheit und Formgenauigkeit durch mechanische Bearbeitung (üblicherweise mit CNC-gesteuerten Maschinen) mit zur Glasbearbeitung bekannten Verfahren erreichen. Noch bevor die Umwandlung in eine opake Keramik erfolgt, kann im noch transparenten Zustand eine Qualitätsprüfung auf besonders einfache Weise durchgeführt werden.

In weiter vorteilhafter Ausgestaltung der Erfindung wird die Absenkung des Rohlings auf die Glaskeramik-Form durch Anlegen eines Vakuums oder eines Überdrucks unterstützt.

Auf diese Weise kann eine besonders hohe Formtreue von < 10 µm erzielt werden.

In zweckmäßiger Weiterbildung der Erfindung wird der Rohling vor der Absenkung auf die Glaskeramik-Form beidseitig endbearbeitet, vorzugsweise poliert.

Auf diese Weise wird eine besonders hohe Qualität und Genauigkeit des hergestellten Formkörpers ermöglicht.

In weiter vorteilhafter Ausgestaltung der Erfindung wird ein Rohling aus einem Borosilikatglas, vorzugsweise aus Borofloat®-Glas, Duran®-Glas oder Pyrex®-Glas bei einer Temperatur zwischen etwa 550°C und 850°C auf die Glaskeramik-Form abgesenkt.

Auf diese Weise lassen sich die vorteilhaften Eigenschaften von Borosilikatglas zur Herstellung von Röntgenspiegelsubstraten ausnutzen, da Borosilikatglas eine besonders geringe Kristallisationsneigung aufweist und in dem angegebenen Temperaturbereich besonders vorteilhaft verarbeitet werden kann. Die Temperatur liegt dabei vorzugsweise deutlich oberhalb der Transformationstemperatur des jeweiligen Glases, wodurch auch bei kurzer Haltezeit eine hohe Formtreue und Oberflächenqualität bei der Abformung erreicht wird.

In vorteilhafter Weiterbildung der Erfindung wird der Formkörper nach der Formgebung mit einer geringen Kühlrate von vorzugsweise höchstens 1 K/min, insbesondere höchstens 0,5 K/min, insbesondere 0,25 K/min, besonders bevorzugt von etwa 0,1 K/min abgekühlt.

Auf diese Weise wird ein besonders spannungsarmer Formkörper mit hoher Formtreue erzielt.

Zur Herstellung von besonders hochwertigen Formkörpern erfolgt die Formgebung des Rohlings vorzugsweise unter Reinraumbedingungen.

In weiter vorteilhafter Ausgestaltung der Erfindung wird die Kontaktfläche des Rohlings mit der Glaskeramik-Form als Rückseite eines daraus herzustellenden Spiegels verwendet.

Auf diese Weise werden etwaige Oberflächendefekte, die bei der Herstellung des Spiegelsubstrates auftauchen können, auf die Rückseite des Spiegels, also damit an eine weniger kritische Stelle, verlagert.

Gemäß einer weiteren vorteilhaften Ausgestaltung der Erfindung wird die Glaskeramik-Form dann, wenn der thermische Ausdehnungskoeffizient der Form kleiner als der des Rohlings ist, konkav ausgebildet.

Dies ist bei den üblicherweise verwendeten Borosilikatgläsern der Fall.

Hierbei kann eine konkave Form mit einem Kegelprofil, Hyperbel-Profil oder einem Parabel-Profil (Wolter-Profil) verwendet werden, sofern ein Einsatz als Röntgenspiegelsubstrat erwünscht ist.

Ist dagegen der thermische Ausdehnungskoeffizient der Glaskeramik-Form größer als der des Rohlings, so wird die Form vorzugsweise konvex ausgebildet.

Der Formkörper kann nach seiner Formgebung endbearbeitet, vorzugsweise poliert werden, um eine möglichst hohe Oberflächenqualität zu gewährleisten.

Sofern eine Verwendung als Spiegelsubstrat beabsichtigt ist, kann der Formkörper ferner mit einer reflektierenden Beschichtung versehen werden.

Als Ausgangsglas zur Herstellung der Keatit-Glaskeramikform wird vorzugsweise ein Glas verwendet, das folgende Bestandteile enthält (in Gew.-%)

| | |
|---|---|
| SiO₂ | 35-75 |
| Al₂O₃ | 17-30 |
| Li₂O | 2-8 |
| B₂O₃ | 0-5 |
| P₂O₅ | 0-17 |
| SnO₂+ZrO₂+TiO₂ | 0,1-7 |
| Na₂O+K₂O+Cs₂O | 0-6 |
| CaO+MgO+SrO+BaO+ZnO | 0-8 |
| Läutermittel wie Sb₂O₃, As₂O₃, SnO₂, CeO₂, Sulfat- oder Chloridverbindungen | 0-3 |
| färbende Oxide wie V₂O₅, Cr₂O₃, MnO, Fe₂O₃, CoO, NiO und sonstige Oxide | 0-10. |

Hierbei wird bevorzugt als Ausgangsglas ein Glas verwendet, das folgende Bestandteile enthält (in Gew.-%):

| | |
|---|---|
| SiO₂ | 55-70 |
| Al₂O₃ | 19-25 |
| Li₂O | 2,5-4,5 |
| B₂O₃ | 0-1 |
| P₂O₅ | 0-8 |
| snO₂+ZrO₂+TiO₂ | 0,5-5 |
| Na₂O+K₂O+Cs₂O | 0,1-3 |
| CaO+MgO+SrO+BaO+ZnO | 0-5 |
| Läutermittel wie Sb₂O₃, As₂O₃, SnO₂, CeO₂, Sulfat- oder Chloridverbindungen | 0-2 |
| färbende Oxide wie V₂O₅, Cr₂O₃, MnO, Fe₂O₃, CoO, NiO und sonstige Oxide | 0-2. |

Mit einem derartigen Lithiumaluminosilicat-Ausgangsglas läßt sich die gewünschte überwiegende Ausbildung einer Keatit-Phase in Keatit-Glaskeramikkörper erzielen. Siliciumoxid, Aluminiumoxid und Lithiumoxid sind in den angegebenen Bereichen notwendig, um eine leichte Kristallisation und eine niedrige thermische Ausdehnung zu gewährleisten. Diese Komponenten sind Bestandteile der Keatit-Mischkristalle. Der Al₂O₃-Gehalt sollte möglichst größer als 19,8 Gew.-% sein, da sonst unerwünscht hohe SiO₂-Gehalte von verbleibenden Hochquarz-Mischkristallen begünstigt werden. Dagegen kann ein zu hoher Al₂O₃-Gehalt zu unerwünschter Entglasung von Mullit führen. Boroxid wird vorzugsweise gar nicht oder nur in geringen Mengen zugesetzt, da höhere Boroxid-Gehalte nachteilig für die Kristallisation sind. Als weitere Komponente kann P₂O₅ zugesetzt werden. Notwendig ist der Zusatz von ZrO₂ oder TiO₂ als Keimbildner zur Kristallisation. Alternativ oder zusätzlich kann hierbei auch SnO₂ zugesetzt werden. Die Zugabe der Alkalien Na₂O, K₂O, Cs₂O, sowie der Erdalkalien CaO, SrO, BaO verbessert die Schmelzbarkeit und das Entglasungsverhalten des Glases bei der Herstellung. In ähnlicher Weise wirken MgO und ZnO. Die Glaskeramik kann bei der Herstellung durch Zusatz üblicher Läutermittel, wie z.B. As₂O₃, Sb₂O₃, SnO₂, CeO₂, Sulfat oder Chloridverbindungen, wie etwa NaCl, hergestellt werden. Weiter können färbende Oxide, wie etwa V₂O₅, Cr₂O₃, MnO, Fe₂O₃, CoO, NiO und sonstige Oxide, in den angegebenen Bereichen enthalten sein.

Bevorzugt kann eine Zusammensetzung verwendet werden, die der bekannten Zusammensetzung von Zerodur® oder Zerodur-M® entspricht, die von der Anmelderin vertrieben wird. Darüber hinaus ist die Verwendung von anderen artverwandten Glaskeramiken wie Ceran®, Robax®, Clearceram®, Neoceram®, Astrositall® als Ausgangsglas möglich.

Wie zuvor bereits erwähnt, ist die erfindungsgemäße Glaskeramik-Form aus Keatit-Keramik besonders geeignet, um Formkörper aus Glas zur Herstellung von Röntgenspiegeln, insbesondere für Teleskopanwendungen, durch Senkformverfahren herzustellen.

Röntgenspiegelsubstrate aus Glas bieten besondere Vorteile gegenüber anderen Substratmaterialien durch ihre hohe Eigensteifigkeit, niedrige Ausdehnung, niedrige Dichte und damit größerer Dicke bei gleicher Masse, gute Polierbarkeit, sowie eine gute Verfügbarkeit auch in großen Abmessungen und eine einfache Bearbeitbarkeit mit existierenden Verfahren. Darüber hinaus kann bei transparenten Formkörpern eine Vermessung innerer Spannungen nach dem Abformprozeß erfolgen. Innere Spannungen im Spiegelsubstrat könnten eine Deformation, Verbiegung oder Verwerfung erzeugen, so daß die benötigte präzise Kontur der Spiegelsegmente nicht mehr erreicht werden kann. Eine Transparenz der hergestellten Formkörper ermöglicht auch eine Prüfung innerer Glasqualitäten.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine schematische Darstellung einer Vorrichtung zum Vakuum-Senkformen unter Verwendung einer erfindungsgemäßen Glaskeramik-Form, im Ausgangszustand,
- Fig. 2: die Vorrichtung gemäß Fig. 1 im Endzustand, in dem sich der Rohling unter Temperatureinfluß mit Vakuumunterstützung an die Oberfläche der Form angelegt hat.

Erfindungsgemäß wird eine Form für die Heißformgebung von Glas oder Glaskeramik als Glaskeramik-Form aus einem Ausgangsglas durch Gießen hergestellt, das durch eine Wärmebehandlung in eine Keatit-Glaskeramik mit überwiegender Keatit-Phase umgewandelt wird. Hierzu kann ein Ausgangsglas verwendet werden, das bevorzugt die folgenden Bestandteile enthält (in Gew.-%):

| | |
|---|---|
| SiO₂ | 55-70 |
| Al₂O₃ | 19-25 |
| Li₂O | 2,5-4,5 |
| B₂O₃ | 0-1 |
| P₂O₅ | 0-8 |
| SnO₂+ZrO₂+TiO₂ | 0,5-5 |
| Na₂O+K₂O+Cs₂O | 0,1-3 |
| CaO+MgO+SrO+BaO+ZnO | 0-5 |
| Läutermittel wie Sb₂O₃, As₂O₃, SnO₂, CeO₂, Sulfat- oder Chloridverbindungen | 0-2 |
| färbende Oxide wie V₂O₅, Cr₂O₃, MnO, Fe₂O₃, CoO, NiO und sonstige Oxide | 0-2. |

Das Lithiumaluminosilicat-Ausgangsglas wird zunächst ggf. unter Zusatz der üblichen Läutermittel erschmolzen und in eine Form gegossen.

Danach kann bspw. zunächst nach der Abkühlung auf Raumtemperatur die Oberflächenbeschaffenheit und die innere Beschaffenheit auf mögliche Einschlüsse, wie Poren, Lunker, Schlieren und dergleichen, geprüft werden und ggf. eine mechanische Nachbearbeitung durch Schleifen, Polieren oder Läppen erfolgen.

Anschließend erfolgt zunächst ein Tempern zur Keimbildung bei einer Keimbildungstemperatur im Bereich von etwa 600 bis 900°C, vorzugsweise im Bereich von etwa 600 bis 800°C. Dabei werden ausgehend von den Keimbildnern TiO₂, ZrO₂ oder SnO₂ Keime in hoher Zahl erzeugt. Stattdessen kann zuvor auch eine Abkühlung etwa bis auf Raumtemperatur erfolgen, wobei gleichfalls Keime gebildet werden. Erst bei einem nachfolgenden Tempern bei einer höheren Temperatur erfolgt eine Kristallisation, d.h. ein Wachsen der Keime, zur Ausbildung einer kristallinen Phase. Dies kann zunächst in einem Bereich erfolgen, der zur Ausbildung der Hochquarz-Kristallphase geeignet ist, nämlich in einem Temperaturbereich von etwa 700 bis 900°C. Wird anschließend auf Raumtemperatur abgekühlt, so erhält man auf diese Weise eine Glaskeramik, die als überwiegenden Kristallanteil Hochquarz-Mischkristalle enthält. Heizt man diese Glaskeramik anschließend auf eine höhere Temperatur auf, die zur Keatit-Bildung notwendig ist, nämlich auf einen Temperaturbereich zwischen etwa 800 und 1300°C, vorzugsweise auf eine Temperatur von mindestens 1000°C, so wandeln sich die zuvor gebildeten Hochquarz-Mischkristalle weitgehend in Keatit-Mischkristalle um, unter gleichzeitigem Kornwachstum. Die Temperung bei Keatit-Bildungstemperatur wird hierbei vorzugsweise bei einer ausreichend hohen Temperatur und über eine ausreichend lange Dauer durchgeführt, um eine möglichst vollständige Umwandlung der Kristallphase in eine Keatit-Mischkristallphase zu gewährleisten. Dies kann bspw. sichergestellt werden, indem bei etwa 1000°C über eine Zeitdauer von mindestens einer Stunde, bspw. über vier Stunden, getempert wird.

Anschließend erfolgt eine Abkühlung auf Raumtemperatur.

Alternativ kann die Keatit-Glaskeramik auch ohne Zwischenabkühlung hergestellt werden, indem nach dem Tempern bei Keimbildungstemperatur sofort bis auf die höhere zur Keatit-Bildung notwendige Temperatur aufgeheizt wird, bei der eine ausreichende Haltedauer eingelegt wird. Da sich hierbei ein opaker Körper ausbildet, wird allerdings eine nachfolgende (optische) Prüfung auf die innere Qualität der so hergestellten Keatit-Glaskeramikform erschwert.

Der resultierende Ausdehnungskoeffizient der Keatit-Glaskeramik zwischen 20°C und 700°C liegt im Bereich von etwa 1 x 10⁻⁶/K bis 3 x 10⁻⁶/K, bevorzugt jedoch bei etwa 2,0 x 10⁻⁶/K.

Zur Herstellung von Spiegelsubstraten, insbesondere für Röntgenspiegel für Teleskopanwendungen gibt die Keatit-Glaskeramikform die inverse Form des benötigten Spiegelsubstrates wieder, wobei die Unterschiede im Ausdehnungskoeffizienten von Form und Glassubstrat berücksichtigt und in der Kontur der Form entsprechend vorgehalten werden. Vorzugsweise wird dabei ein möglichst niedriger Unterschied der beiden Ausdehnungskoeffizienten verwendet und der Ausdehnungskoeffizient der Keatit-Glaskeramikform durch den Herstellungsprozeß entsprechend angepaßt. Ist der Ausdehnungskoeffizient der Form größer als der des Glases, wird bevorzugt eine konvexe Form verwendet. Ist der Ausdehnungskoeffizient der Form jedoch geringer als der des Glases, wie etwa bei der Verwendung von Borosilikatglas, so ist eine konkave Form vorzusehen. Zur Formgebung von hochgenauen Spiegelsubstraten ist vorzugsweise die spätere Spiegelrückseite in Kontakt mit der Form, um Oberflächendefekte durch den Kontakt auf der Spiegelseite zu vermeiden.

Bevorzugte Materialien für die Spiegelsubstrate sind Borosilikatgläser (Borofloat®, Duran®, Pyrex®), mit einem niedrigen Ausdehnungskoeffizienten von 3 bis 4 x 10⁻⁶/K. Vorzugsweise wird das Glassubstrat vorher beidseitig poliert, um eine geringe Dickenvariation des Glases und eine ebene Oberfläche zu erzielen. Das Glassubstrat wird in der Regel in Form einer ebenen Platte aufgelegt und beide werden mit einem Temperaturprogramm auf eine Temperatur oberhalb der Transformationstemperatur des Substratglases aufgeheizt (T>Tg). Bei bestimmten Borosilikatgläsern (Borofloat®) liegt die erforderliche Senktemperatur dabei zwischen 560°C und 760°C. Die Abkühlung auf Raumtemperatur erfolgt vorzugsweise mit langsamen Kühlraten von ca. 0,5 K/min zur Vermeidung innerer Spannungen im Glassubstrat. Eine entsprechend gute Temperaturhomogenität im Ofen ist zu gewährleisten. Für die bei Röntgenspiegelsubstraten geforderte Oberflächenqualität ist weiterhin auf eine besondere Sauberkeit der Kontaktflächen von Form und Substrat zu achten. Vorzugsweise findet der Senkprozeß daher in einem Reinraum zur Vermeidung von Staubpartikeln statt. Bei einem Senken unter Schwerkrafteinfluß können Genauigkeiten von < 30 µm erzielt werden. Mit Unterstützung durch Vakuum oder ggf. durch Überdruck kann eine Formgenauigkeit von < 10 µm oder geringer erzielt werden. Beim Senken ist zu berücksichtigen, daß eine Abstimmung der Senktemperatur auf die Senkgeometrie vorgenommen werden muß. Bei anderen Dicken und anderen Dimensionen ist die Senktemperatur anzupassen.

### Beispiel

Es wurde ein Ausgangsglas aus folgenden Bestandteilen (in Gew.-%) erschmolzen:

| | |
|---|---|
| SiO₂ | 55,5 |
| Al₂O₃ | 25,3 |
| P₂O₅ | 7,90 |
| Li₂O | 3,70 |
| Na₂O | 0,50 |
| MgO | 1,00 |
| ZnO | 1,40 |
| TiO₂ | 2,30 |
| ZrO₂ | 1,90 |
| As₂O₃ | 0,50. |

Dies entspricht einer möglichen Zusammensetzung der von der Anmelderin unter der Marke Zerodur® vertriebenen Glaskeramik. Das so hergestellte Ausgangsglas wurde nach der Läuterung zu einem Rohglasblock gegossen und dann mit einem Temperaturprogramm durch kontrollierte Kristallisation keramisiert. Hierzu erfolgte zunächst mit 0,1 K/min eine Aufheizung auf 730°C, ein Halten über eine Dauer von 24 Stunden bei 730°C, dann ein Aufheizen mit 0,1 K/min bis auf 850°C, ein weiteres Halten über 48 Stunden bei 850°C und dann ein langsames Abkühlen auf Raumtemperatur mit 0,1 K/min.

Je nach der Größe des Glaskeramikblockes ist hierbei das Temperaturprogramm entsprechend anzupassen, um eine hochwertige rißfreie Glaskeramik mit einer Hochquarz-Mischkristallphase im gewünschten Bereich zu erhalten.

Die Kristallisation ist ein exothermer Prozeß, bei dem das Material schrumpft. Zur Herstellung großer, qualitativ hochwertiger Glaskeramikblöcke muß über den gesamten Glaskeramikblock eine homogene Temperaturverteilung mit einer lokalen Temperaturabweichung von höchstens 2K eingehalten werden. So kann der Keramisierungsprozeß bei großen Blöcken von mehreren Metern Durchmesser bis zu beispielsweise neun Monaten dauern.

Aus einem so hergestellten Glaskeramikblock mit überwiegender Hochquarz-Kristallphase wurde ein geeignetes Rohteil herausgetrennt und an seiner Oberfläche mechanisch bearbeitet und auf seine Qualität geprüft.

Dann erfolgte ein Aufheizen mit 1 K/min auf 1000°C und ein Halten bei dieser Temperatur über eine Zeitdauer von vier Stunden, bevor wieder eine kontrollierte Abkühlung auf Raumtemperatur mit 1 K/min erfolgte.

Die so hergestellte Keatit-Glaskeramik war vollständig opak und wies nur noch einen geringen glasigen Restbestandteil auf, während die Kristallphase praktisch vollständig in Keatit-Mischkristallphase umgewandelt war. Die so hergestellte Form wurde mechanisch bearbeitet und schließlich geläppt, um die notwendige Form und Oberflächenbeschaffenheit zu erhalten.

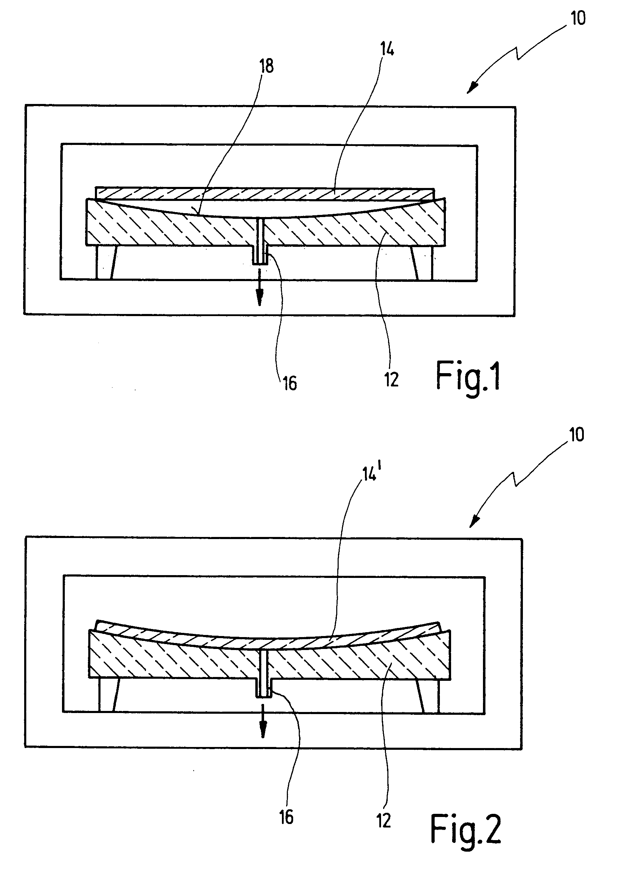

Von dieser Form wurde in einem Ofen, der in den Figuren 1 und 2 dargestellt ist und insgesamt mit der Ziffer 10 bezeichnet ist, ein Borosilikatglas-Rohling abgeformt.

Bei dem Ofen 10 handelt es sich um einen herkömmlichen Ofen, der eine möglichst gleichmäßige Temperaturverteilung aufweist und ein gezieltes Aufheizen und Kühlen mit sehr geringen Heiz- bzw. Kühlraten ermöglicht.

In einem derartigen Ofen 10 wurde ein Borosilikatglas-Rohling 14 aus Borofloat® ohne Anlegen eines Vakuums auf die zuvor hergestellte Keatit-Glaskeramikform 12 bei etwa 650°C abgesenkt.

Mit einem derartigen Absenkverfahren ließ sich eine Flächenformtoleranz der so hergestellten Formkörper 14' unter Verwendung von beidseitig polierten Borofloat®-Glasscheiben von < 30 µm erreichen.

Um eine noch bessere Flächenformtoleranz von < 10 µm zu erreichen, ist ein Vakuumsenken bevorzugt, wie in den Figuren 1 und 2 angedeutet. Hierbei wird die Keatit-Glaskeramikform 12 bevorzugt bereits mit einem oder mehreren Vakuumanschlüssen 16 hergestellt, an den dann später, wie in Fig. 2 angedeutet, während der Heißformgebung des Glassubstrates 14' ein Vakuum angelegt wird. Hierbei legt sich der Rohling 14 mit hoher Formtreue von < 10 µm an die Oberfläche 18 der Keatit-Glaskeramikform 12 an.

## Patentansprüche

1. Verfahren zur Herstellung einer Form für die Heißformgebung von Glas oder Glaskeramik, bei dem die Form als Glaskeramik-Form (12) aus einem Ausgangsglas durch Gießen hergestellt wird, das durch eine Wärmebehandlung in eine Keatit-Glaskeramik mit überwiegender Keatit-Mischkristallphase umgewandelt wird.

2. Verfahren zur Formung von Glas oder Glaskeramik, insbesondere zur Herstellung eines Spiegelsubstrates, bei dem ein Formkörper (14') durch Absenken eines Rohlings (14) unter Schwerkrafteinfluß auf eine Glaskeramik-Form (12) mit überwiegender Keatit-Mischkristallphase, die vorzugsweise gemäß Anspruch 1 hergestellt ist, bei einer Temperatur oberhalb der Transformationstemperatur des Rohlings (14) hergestellt wird.

3. Verfahren nach Anspruch 1 oder 2, bei dem die Herstellung der Glaskeramik-Form (12) die folgenden Schritte umfaßt:
- Gießen eines Lithiumaluminosilicat-Ausgangsglases in eine Form,
- Keimbilden durch Abkühlen auf Raumtemperatur und/oder durch Tempern zur Keimbildung bei einer Keimbildungstemperatur von etwa 600 bis 900°C,
- Tempern zur Herstellung einer Keatit-Glaskeramik bei einer Keatit-Bildungstemperatur von etwa 800 bis 1300°C, bis die kristalline Phase überwiegend aus Keatit-Mischkristallen besteht,
- Abkühlen der so hergestellten Glaskeramik-Form (12) auf Raumtemperatur.

4. Verfahren nach Anspruch 3, bei dem ein Tempern zur Kristallisation bei einer Kristallisationstemperatur, die höher als die Keimbildungstemperatur ist, und ein Tempern zur Keatit-Bildung bei einer Keatit-Bildungstemperatur erfolgt, die höher als die Kristallisationstemperatur ist.

5. Verfahren nach einem der Ansprüche 3 oder 4, bei dem das Ausgangsglas nach dem Gießen oder nach einem nachfolgenden Tempern im noch transparenten Zustand auf seine Qualität geprüft wird, bevor durch ein Tempern bei Keatit-Bildungstemperatur eine Umwandlung in einen opaken Körper erfolgt.

6. Verfahren nach Anspruch 4 oder 5, bei dem die Keimbildungstemperatur im Bereich von 650 bis 850°C liegt, die Kristallisationstemperatur im Bereich von 700 bis 900°C liegt und die Keatit-Bildungstemperatur im Bereich zwischen 800 und 1300°C liegt.

7. Verfahren nach einem der vorhergehenden Ansprüche, bei dem ein Tempern zur Keatit-Bildung bei mindestens 900°C, vorzugsweise bei mindestens 1000°C über mindestens eine Stunde, insbesondere über mindestens zwei Stunden durchgeführt wird.

8. Verfahren nach einem der vorhergehenden Ansprüche, bei dem ein Tempern zur Keatit-Bildung bei einer derartigen Temperatur und Zeit durchgeführt wird, daß mindestens etwa 80 Vol.-% des kristallinen Anteils, vorzugsweise mindestens etwa 85 Vol.-%, vorzugsweise mindestens etwa 90 Vol.-% des kristallinen Anteils des Materials in Keatit-Mischkristalle umgewandelt werden.

9. Verfahren nach einem der vorhergehenden Ansprüche, bei dem die Glaskeramik-Form (12) nach dem Gießen des Ausgangsglases und/oder nach dem Tempern mechanisch nachbearbeitet wird, insbesondere gesägt, geschliffen, geläppt oder poliert wird.

10. Verfahren nach einem der Ansprüche 2 bis 9, bei dem die Absenkung des Rohlings (14) auf die Glaskeramik-Form (12) durch Anlegen eines Vakuums oder eines Überdrucks unterstützt wird.

11. Verfahren nach einem der Ansprüche 2 bis 10, bei dem der Rohling (14) vor der Absenkung auf die Glaskeramik-Form (12) ein- oder beidseitig endbearbeitet, vorzugsweise poliert wird.

12. Verfahren nach einem der Ansprüche 2 bis 11, bei dem ein Rohling (14) aus einem Borosilikatglas, vorzugsweise aus Borofloat®-Glas, Duran®-Glas oder Pyrex®-Glas bei einer Temperatur zwischen etwa 550°C und 850°C auf die Glaskeramik-Form (12) abgesenkt wird.

13. Verfahren nach Anspruch 12, bei dem der Formkörper (14') nach der Formgebung mit einer geringen Kühlrate von vorzugsweise höchstens 1,0 K/min, insbesondere höchstens 0,5 K/min, insbesondere 0,25 K/min, besonders bevorzugt von etwa 0,1 K/min abgekühlt wird.

14. Verfahren nach einem der Ansprüche 2 bis 13, bei dem die Formgebung des Formkörpers (14') unter Reinraumbedingungen durchgeführt wird.

15. Verfahren nach einem der Ansprüche 2 bis 14, bei dem die Glaskeramik-Form (12) dann, wenn der thermische Ausdehnungkoeffizient der Form kleiner als der des Rohlings (14) ist, konkav ausgebildet wird.

16. Verfahren nach einem der Ansprüche 2 bis 14, bei dem die Glaskeramik-Form (12) dann, wenn der thermische Ausdehnungkoeffizient der Form größer als der des Rohlings (14) ist, die Form konvex ausgebildet wird.

17. Verfahren nach einem der vorhergehenden Ansprüche, bei dem die Glaskeramik-Form (12) mit einem Kegelprofil, einem Hyperbel-Profil, einem Parabel-Profil oder einem Wolter-Profil hergestellt wird.

18. Verfahren nach einem der Ansprüche 2 bis 17, bei dem der Formkörper (14') nach seiner Formgebung endbearbeitet, vorzugsweise poliert wird.

19. Verfahren nach einem der Ansprüche 2 bis 18, bei dem der Formkörper (14') mit einer reflektierenden Beschichtung versehen wird.

20. Verfahren nach einem der vorhergehenden Ansprüche, bei dem als Ausgangsglas zur Herstellung der Keatit-Glaskeramikform (12) ein Glas verwendet wird, das folgende Bestandteile enthält (in Gew.-%):
| | |
|---|---|
| SiO₂ | 35-75 |
| Al₂O₃ | 17-32 |
| Li₂O | 2-8 |
| B₂O₃ | 0-5 |
| P₂O₅ | 0-17 |
| SnO₂+ZrO₂+TiO₂ | 0,1-7 |
| Na₂O+K₂O+Cs₂O | 0-6 |
| CaO+MgO+SrO+BaO+ZnO | 0-8 |
| Läutermittel wie Sb₂O₃, As₂O₃, SnO₂, CeO₂, Sulfat- oder Chloridverbindungen | 0-3 |
| färbende Oxide wie V₂O₅, Cr₂O₃, MnO, Fe₂O₃, CoO, NiO und sonstige Oxide | 0-10. |

21. Verfahren nach Anspruch 20, bei dem als Ausgangsglas zur Herstellung der Keratit-Glaskeramikform (12) ein Glas verwendet wird, das folgende Bestandteile enthält (in Gew.-%):
| | |
|---|---|
| SiO₂ | 55-70 |
| Al₂O₃ | 19-25 |
| Li₂O | 2,5-4,5 |
| B₂O₃ | 0-1 |
| P₂O₅ | 0-8 |
| SnO₂+ZrO₂+TiO₂ | 0,5-5 |
| Na₂O+K₂O+Cs₂O | 0,1-3 |
| CaO+MgO+SrO+BaO+ZnO | 0-5 |
| Läutermittel wie Sb₂O₃, As₂O₃, SnO₂, CeO₂, Sulfat- oder Chloridverbindungen | 0-2 |
| färbende Oxide wie V₂O₅, Cr₂O₃, MnO, Fe₂O₃, CoO, NiO und sonstige Oxide | 0-2. |

22. Form zur Heißformgebung von Glas oder Glaskeramik, bestehend aus einer Glaskeramik aus einem Lithiumaluminosilicat-Ausgangsglas, das durch eine Wärmebehandlung in eine Glaskeramik mit überwiegender Keatit-Phase umgewandelt ist.

23. Formkörper aus Glas oder Glaskeramik, hergestellt nach einem der Ansprüche 2 bis 22, mit einer Flächenformtoleranz von <30 µm, vorzugsweise von <10 µm.

24. Verwendung eines Formkörpers (14') nach Anspruch 23 zur Herstellung eines Röntgenspiegels, insbesondere für Teleskopanwendungen.
